# FASCICULE DE BREVET EUROPEEN

(11) **EP 1 776 730 B1**
(45) Date de publication et mention de la délivrance du brevet: **23.09.2015**
(21) Numéro de dépôt: 05753784.7
(22) Date de dépôt: 27.06.2005
(51) Int. Cl.: H01M 8/04, H01M 8/10

(54) **CONTROLE DE L'HUMIDIFICATION DE LA MEMBRANE POLYMERE D'UNE PILE A COMBUSTIBLE**
STEUERUNG DER POLYMER-BEFEUCHTUNG DER MEMBRAN EINER BRENNSTOFFZELLE
CONTROL OF THE POLYMER HUMIDIFYING MEMBRANE OF A FUEL CELL

(30) Priorité: 20.07.2004 FR 0408057
(43) Date de publication de la demande: 25.04.2007
(73) Titulaire: MICHELIN Recherche et Technique S.A., 1763 Granges-Paccot (CH); PAUL SCHERRER INSTITUT, 5232 Villigen PSI (CH)
(72) Inventeur: TSUKADA, Akinori, CH-5416 Kirchdorf AG (CH)
(74) Mandataire: Roussy, Delphine
(86) Numéro de dépôt international: PCT/EP2005/006889
(87) Numéro de publication internationale: WO 2006/012953

(56) Documents cités:
- EP-A- 1 389 806
- US-A- 3 704 172
- US-A- 3 716 415
- US-A- 4 362 789
- PATENT ABSTRACTS OF JAPAN vol. 2003, no. 12, 5 décembre 2003 (2003-12-05) -& JP 2004 079251 A (EBARA CORP), 11 mars 2004 (2004-03-11)
- PATENT ABSTRACTS OF JAPAN vol. 1997, no. 11, 28 novembre 1997 (1997-11-28) -& JP 09 180743 A (FUJI ELECTRIC CO LTD), 11 juillet 1997 (1997-07-11)

## Description

### DOMAINE DE L'INVENTION

La présente invention se rapporte aux piles à combustible, notamment aux applications automobiles des piles à combustible.

### ETAT DE LA TECHNIQUE

On sait que les piles à combustible permettent la production directe d'énergie électrique par une réaction électrochimique d'oxydoréduction à partir d'hydrogène (le carburant) et d'oxygène (le comburant), sans passer par une conversion en énergie mécanique. Cette technologie semble prometteuse notamment pour des applications automobiles. Une pile à combustible comporte en général l'association en série d'éléments unitaires qui, chacun, sont constitués essentiellement d'une anode et d'une cathode séparées par un électrolyte.

Un type d'électrolyte qui se prête bien aux applications automobiles est un électrolyte solide constitué essentiellement par une membrane polymère, permettant le passage d'ions de l'anode à la cathode. Un type particulier de ces membranes est proposé par exemple par la société DuPont sous l'appellation commerciale « Nafion ». Ces membranes doivent présenter une bonne conductivité ionique car elles sont traversées par les protons hydrogènes et elles doivent être électriquement isolantes afin que les électrons cheminent par le circuit électrique extérieur à la pile. On sait que, non seulement pour les membranes du type indiqué ci-dessus mais également pour d'autres membranes utilisées comme électrolyte solide dans des piles à combustible, la conductibilité des membranes est fonction de leur teneur en eau. C'est la raison pour laquelle les gaz d'alimentation de la pile doivent être suffisamment humides.

En ce qui concerne le carburant, soit on dispose d'une alimentation en hydrogène, soit on produit l'hydrogène dont on a besoin près de la pile à combustible au moyen d'un reformeur lui-même alimenté par exemple par un hydrocarbure. En ce qui concerne le comburant, soit on alimente la pile à combustible en air atmosphérique comprimé et on rejette en aval de la pile à combustible le gaz en excès dans lequel la proportion d'oxygène a diminué, soit on alimente la pile à combustible en oxygène pur.

Dans son fonctionnement normal, une pile à combustible consomme de l'hydrogène (le carburant) et de l'oxygène (le comburant, fourni par l'air ambiant ou fourni sous forme de gaz pur). La pile à combustible est le siège d'une réaction anodique par laquelle l'hydrogène (H₂) se transforme en protons hydrogènes (2H⁺) qui traversent la membrane polymère et en électricité (2e⁻) qui circulent dans le circuit électrique extérieur. La pile à combustible est en même temps le siège d'une réaction cathodique par laquelle les protons hydrogène (2H⁺), les électrons (2e⁻) se combinent avec l'oxygène (1/2O₂) pour produire de l'eau (H₂O). La pile à combustible produit donc en permanence de l'eau, essentiellement dans le circuit de gaz de la cathode (oxygène), et de façon proportionnelle au courant électrique absorbé par la charge électrique branchée à la pile. Le gaz côté cathode est donc rapidement saturé en eau, et même sursaturé (c'est à dire qu'outre de l'eau sous forme de gaz, il contient aussi de l'eau sous forme liquide).

La demande de brevet US 2002/0175010 illustre que l'on utilise classiquement l'eau produite par la pile pour assurer l'humidification de la membrane polymère, aussi bien du côté cathode que du côté anode. En ce qui concerne l'humidification de la membrane du côté anode, c'est-à-dire dans le circuit d'hydrogène, il est notamment proposé d'utiliser une membrane perméable à l'eau, une de ses faces étant au contact de l'air sursaturé en eau et l'autre de ses faces étant au contact de l'hydrogène. Cependant, cette solution, outre qu'elle est complexe, ne permet pas une véritable régulation du taux d'humidité dans le gaz.

La demande de brevet JP2004/079251 décrit la déshumidification de l'hydrogène produit dans un électrolyseur ou dans un reformeur. L'hydrogène à déshumidifier ne provient pas de du recyclage. Il est proposé de contrôler l'humidification de l'hydrogène en mélangeant de l'hydrogène déshumidifié provenant d'un déshumidificateur avec de l'hydrogène très humide circulant dans un circuit en dérivation ne passant pas par le déshumidificateur, ce dernier débit étant contrôlé avec une vanne proportionnelle sur ledit circuit en dérivation.

La demande de brevet EP 1 389 806 décrit une pile à combustible à électrolyte polymère solide comportant une disposition particulière des canaux internes à la pile de façon à améliorer une région de rétention d'eau à l'intérieur de la pile pour maîtriser l'humidification. La demande de brevet JP09/180743 propose de contrôler le taux d'humidité en agissant sur la température des séparateurs d'eau. Toutes ces publications portent sur le problème de l'humidification d'une pile à électrolyte polymère solide mais aucune ne propose une solution fiable et précise pour assurer en toutes circonstances une humidification correcte de la membrane électrolyte polymère.

### BREVE DESCRIPTION DE L'INVENTION

L'objectif de la présente invention est de proposer un moyen permettant l'optimisation du taux d'humidité d'un gaz ou des gaz alimentant une pile à combustible dont l'électrolyte est tel que la pile à combustible présente des caractéristiques de fonctionnement optimales dans des conditions d'humidifications prédéterminées. On sait que c'est le cas, parmi les électrolytes connus actuellement, pour un type d'électrolyte formé essentiellement par une membrane polymère solide.

L'invention propose un système de production d'électricité, comprenant :
- une pile à combustible comportant une pluralité de cellules ayant chacune une anode et une cathode de part et d'autre d'un électrolyte à membrane polymère solide ayant des caractéristiques de fonctionnement optimales dans des conditions d'humidifications prédéterminées, la pile ayant un circuit d'alimentation en gaz carburant côté anodes et un circuit d'alimentation en gaz comburant côté cathodes ;
- au moins un circuit de recyclage de l'un des gaz carburant ou comburant, recyclant le gaz non consommé par la pile, le circuit de recyclage comportant un dispositif de déshumidification permettant de retirer du gaz non consommé l'eau qu'il contient, le circuit de recyclage collectant un gaz humide en aval de la pile, acheminant le gaz humide au dispositif de déshumidification et ramenant un gaz déshumidifié au circuit d'alimentation en amont de la pile après que le gaz a traversé le dispositif de déshumidification ;
caractérisé en ce que le circuit de recyclage comporte un circuit direct installé en parallèle du dispositif de déshumidification, prélevant le gaz humide en aval de la pile et acheminant le gaz humide au circuit d'alimentation sans passer par le dispositif de déshumidification, et en ce qu'il comporte des moyens de dosage pour contrôler la proportion entre gaz humide et gaz déshumidifié ramené en amont de la pile.

### BREVE DESCRIPTION DES FIGURES

La suite de la description permet de bien faire comprendre tous les aspects de l'invention en s'appuyant sur la figure unique qui illustre le circuit de refroidissement installé sur un véhicule automobile équipé d'une pile à combustible.

### DESCRIPTION DU MEILLEUR MODE DE REALISATION DE L'INVENTION

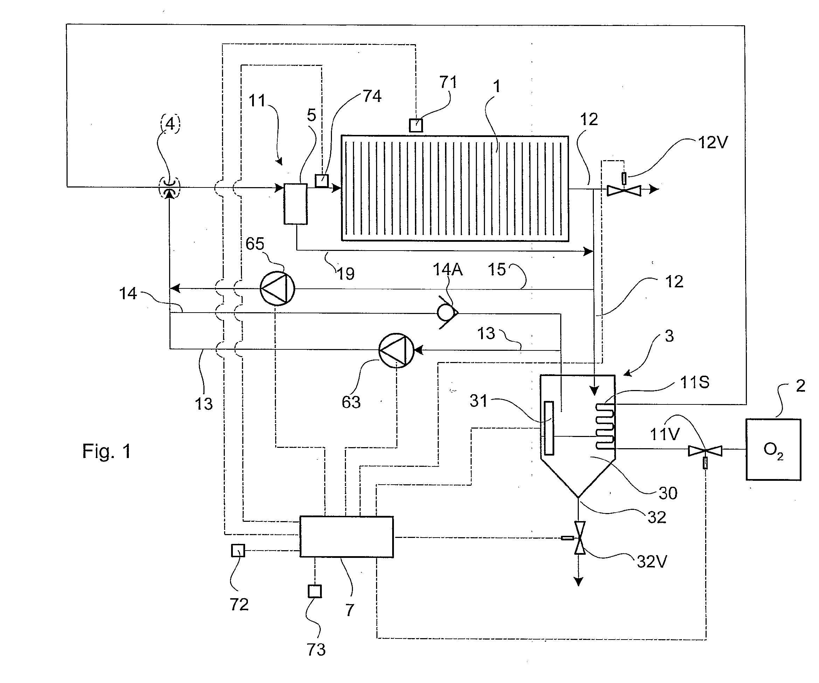

A la figure 1, on voit une pile à combustible 1 du type à électrolyte sous la forme d'une membrane polymère (c'est à dire de type PEFC pour Polymer Electrolyte Fuel Cell). Mais l'invention est applicable à tout électrolyte pour lequel la pile à combustible présenterait des caractéristiques de fonctionnement optimales pour des conditions d'humidification des gaz contrôlées.

La pile est approvisionnée par deux gaz, à savoir le carburant (par exemple de l'oxygène) et le comburant (l'oxygène de l'air ou d'une réserve d'oxygène comprimé) qui alimentent les électrodes des cellules électrochimiques. Pour simplifier, la figure 1 ne représente qu'un seul des deux circuits de gaz, à savoir un circuit de gaz coté cathodes qui dans ce cas est un circuit d'oxygène pur (voir alimentation O₂ sur la figure). Il est bien entendu que l'on peut adopter les mêmes dispositions du coté hydrogène. La suite de la description se borne à décrire, sans que ceci ne soit le moins du monde limitatif, un circuit de recyclage sur le circuit de gaz comburant, c'est-à-dire côté cathodes.

On voit un réservoir d'oxygène 2, relié à la pile au moyen d'une canalisation d'entrée 11 qui passe par différents organes avant d'être branchée à l'entrée de la pile à combustible 1. Cette canalisation d'entrée 11 passe d'abord par une vanne de coupure 11v et éventuellement par d'autres vannes non représentées. On sait que le circuit d'oxygène forme une boucle car on fait passer au travers la pile un débit de gaz supérieur à sa consommation et le débit non consommé par la pile est recyclé. A cette fin, le circuit d'alimentation 11 passe ensuite par un éjecteur 4. Ensuite, on trouve un séparateur d'eau 5 constitué par exemple par un cyclone, c'est à dire un appareil permettant de retirer l'eau liquide du gaz par un effet de centrifugation. En sortie inférieure de ce cyclone 5, une canalisation 19 permet d'acheminer l'eau liquide en aval de la pile à combustible 1 où elle rejoint une canalisation de sortie 12 des gaz de la pile à combustible 1. Enfin, le circuit d'alimentation 11 est branché à l'orifice d'entrée du circuit cathodique de la pile à combustible 1.

A la sortie de la pile à combustible 1, on voit donc la canalisation de sortie 12 allant jusqu'à un dispositif de déshumidification 3. Une purge du circuit d'oxygène est branchée en dérivation à la canalisation de sortie 12 et est contrôlée par une vanne de purge 12v. Le dispositif de déshumidification 3 est constitué essentiellement d'un bocal recueillant par gravité l'eau liquide emportée par le gaz. On voit que, juste après la vanne de coupure 11v, le circuit d'alimentation en oxygène passe par un serpentin 115 disposé à l'intérieur du dispositif de déshumidification 3. Cela permet principalement la réchauffe de l'oxygène après sa détente. En outre, cela est utile pour provoquer la condensation de l'eau présente dans le gaz sous forme de vapeur, ce qui améliore l'efficacité du déshumidificateur 3.

Un détecteur de niveau 31 d'eau 30 est monté à l'intérieur du dispositif de déshumidification 3 et une canalisation de vidange aboutit au fond 32 du dispositif de déshumidification 3. L'évacuation de l'eau se fait sous l'effet de la pression du circuit d'oxygène de la pile à combustible 1, agissant à la surface de l'eau dans le bocal, pour expulser l'eau vers la canalisation de vidange. La quantité d'eau évacuée est contrôlée par une vanne de vidange 32v.

Une canalisation de récupération contrôlée 13 est branchée d'un côté à la partie supérieure du dispositif de déshumidification 3 et de l'autre côté à l'éjecteur 4. Une pompe 63 est installée sur cette canalisation de récupération 13. Une canalisation de récupération passive 14 est branchée d'un côté à la partie supérieure du dispositif de déshumidification 3 et de l'autre côté à l'éjecteur 4. Cette canalisation de récupération passive 14 est donc branchée en parallèle de la canalisation de récupération contrôlée 13. Elle ne comporte aucune pompe ou autre moyen de contrôle actif du débit. Elle comporte un clapet anti-retour 14A. Le débit la traversant est provoqué par un effet Venturi dans l'éjecteur 4.

Un circuit direct 15 permet de ne pas passer par le dispositif de déshumidification 3. On voit que ce circuit est, d'un côté, branché sur la canalisation de sortie 12 en amont du dispositif de déshumidification 3, et qu'il aboutit, de l'autre côté, à la canalisation de récupération 13 après la pompe 63 et avant l'éjecteur 4. Ce circuit direct 15 comporte une pompe 65.

Le circuit de recyclage est ainsi formé par la canalisation de sortie 12, la canalisation de récupération contrôlée 13, la canalisation de récupération passive.14, le circuit direct 15 et par les organes installés sur ces canalisations et circuit, notamment les pompes 63 et 65 ainsi que le dispositif de déshumidification 3. La canalisation de récupération contrôlée 13 et la canalisation de récupération passive 14 forme un circuit de recyclage de gaz sec. Le circuit direct 15 forme un circuit de recyclage de gaz humide.

Une unité de commande 7 permet le pilotage des différents organes du système de production de l'énergie électrique utilisant la pile à combustible 1. Les moyens de dosage de la proportion de gaz sec et de gaz humide recyclé comportent ladite unité de commande 7, qui permet de piloter sélectivement le fonctionnement des pompes 63 et 65.

A cette fin, l'unité de commande 7 utilise les informations provenant de différents capteurs comme un capteur de température 71 de la pile à combustible 1, un indicateur de la puissance électrique 72 délivrée par la pile à combustible 1, un ou plusieurs voltmètres 73 mesurant la tension électrique délivrée par la pile et/ou la tension électrique de chaque cellule dans la pile ou d'au moins certaines cellules, le taux d'humidité mesuré par un capteur d'humidité 74 installé juste à l'entrée de la pile 1, ainsi qu'éventuellement d'autres paramètres comme la température de l'oxygène à l'entrée de la pile, la température des parois du déshumidificateur 3, la température de l'eau de refroidissement, etc. .... L'unité de commande 7 permet d'agir sur la vanne de coupure 11v ou sur une vanne permettant d'asservir la pression d'alimentation en oxygène à la puissance électrique délivrée, sur la vanne de purge 12v pour par exemple effectuer de temps à autre une purge fugitive du gaz afin de ne pas accumuler des gaz inertes qui pourraient faire baisser le rendement de la pile. L'unité de commande 7 permet aussi, dès que le niveau d'eau dans le déshumidificateur 3 atteint un maximum détecté par le détecteur de niveau d'eau 31, d'ouvrir la vanne de vidange 32v pendant une durée prédéfinie, par exemple de l'ordre d'une fraction de seconde, de façon à laisser s'échapper une certaine quantité d'eau. Ou bien on régule au moyen d'un détecteur de minimum de niveau d'eau.

En ce qui concerne les moyens de dosage dont il a été question dans la brève présentation de l'invention faite ci-dessus, dans le mode particulier de réalisation illustrant cette description, ils comportent en fait les deux pompes 63 et 65, l'une (65) installée sur le circuit direct, l'autre (63) installée sur le circuit de recyclage en aval du dispositif de déshumidification, et il comporte une unité de commande 7 permettant de piloter sélectivement le fonctionnement des pompes 63 et 65 en tenant compte, éventuellement empiriquement, du débit de gaz recyclé par l'effet Venturi de l'éjecteur 4, afin de doser correctement la proportion entre gaz humide, recyclé directement par le circuit direct 15, et gaz sec, recyclé via le dispositif de déshumidification 3. De préférence, l'unité de commande 7 pilote sélectivement le fonctionnement des pompes 63 et 65 en fonction des valeurs transmises par le capteur d'humidité 74.

En particulier, pendant les phases de démarrage, lorsque la pile à combustible 1 est encore froide, l'unité de commande 7 envoie à l'unité de gestion de l'énergie équipant par ailleurs le véhicule un ordre de limitation de la puissance soutirée à la pile à combustible 1 et, pendant la phase de réchauffage de la pile, provoque le recyclage direct du gaz en actionnant la pompe 65 sans actionner la pompe 63.

Le gaz d'alimentation provenant du réservoir stockage 2 est généralement froid (malgré la réchauffe dans le déshumidificateur 3 car il a subi une détente importante) et sec. Le mélange de ce gaz froid avec celui de recyclage permet de rehausser la température et le taux d'humidité à des valeurs suffisantes sans grand apport d'énergie extérieure. En effet, le gaz sortant directement de la pile à combustible 1 et circulant dans la canalisation de sortie 12 est chaud et saturé en vapeur d'eau, voire sursaturé. Celle-ci est éliminée dans le dispositif de déshumidification 3. Ensuite, le gaz circulant dans la canalisation de récupération 13 est plus froid. En tenant compte des conditions qui règnent dans la pile à combustible 1 (démarrage à froid, à pleine puissance, etc.), l'unité de commande 7 peut agir sur la pompe 65 (circulateur « humide ») pour favoriser le recyclage de gaz chaud et dépourvu de gouttelettes, ou sur la pompe 63 (circulateur « sec ») pour favoriser le recyclage de gaz moins chaud et plus sec, et peut commander n'importe quelle proportion entre ces deux gaz. On peut ainsi obtenir un mélange optimal de gaz humidifié pour alimenter la pile à combustible 1.

Dans certaines phases de fonctionnement, on peut arrêter les deux pompes et laisser le recyclage se faire par le seul effet Venturi de par la présence d'un éjecteur, ce qui présente l'avantage d'économiser l'énergie. Notons que l'éjecteur n'est pas obligatoire pour la mise en oeuvre de l'invention. Dans une application plus simple, on pourrait supprimer l'éjecteur et le remplacer par un simple branchement, et supprimer la canalisation de récupération passive 14. La canalisation de récupération contrôlée 13 et le circuit direct 15, avec leurs pompes 65 et 63 respectives permettent la maîtrise de la proportion entre les gaz sec et humide.

En variante, pour le circuit de gaz comburant, on peut prévoir une alimentation en mélange d'oxygène et d'au moins un gaz neutre, par exemple 30% d'azote. Mais on a décrit une application qui utilise de l'oxygène pur stocké sous pression. Cette solution présente quelques avantages, notamment une réponse plus dynamique de la pile à une demande de courant, ce qui est intéressant en particulier pour les applications aux engins de transport comme les automobiles dont on sait qu'elles imposent des conditions de fonctionnement particulièrement intermittentes, contrairement aux applications stationnaires. Comme autres avantages d'une alimentation d'une pile à combustible en oxygène pur, citons encore que le rendement et la densité de puissance sont meilleurs. En outre, s'agissant de l'humidification, elle est aussi plus efficace en fonctionnant à l'oxygène pur plutôt qu'avec de l'air comprimé. En effet, à même quantité d'oxygène utilisé par la pile, si elle est alimentée en air qui ne contient qu'environ 21% d'oxygène, la même quantité d'eau produite par la pile sera incorporée dans un volume considérablement plus grand de gaz. Donc pour atteindre le même degré d'humidité du gaz, il faudra vaporiser environ 5 fois plus d'eau.

## Revendications

1. Système de production d'électricité, comprenant :
- une pile à combustible (1) comportant une pluralité de cellules ayant chacune une anode et une cathode de part et d'autre d'un électrolyte à membrane polymère solide ayant des caractéristiques de fonctionnement optimales dans des conditions d'humidifications prédéterminées, la pile ayant un circuit d'alimentation (11) en gaz carburant côté anodes et un circuit d'alimentation en gaz comburant côté cathodes ;
- au moins un circuit de recyclage de l'un des gaz carburant ou comburant, recyclant le gaz non consommé par la pile, le circuit de recyclage comportant un dispositif de déshumidification (3) permettant de retirer du gaz non consommé l'eau qu'il contient, le circuit de recyclage collectant un gaz humide en aval de la pile, acheminant le gaz humide au dispositif de déshumidification et ramenant un gaz déshumidifié au circuit d'alimentation (11) en amont de la pile après que le gaz a traversé le dispositif de déshumidification ;
**caractérisé en ce que** le circuit de recyclage comporte une canalisation de recyclage contrôlé (13) comportant une pompe (63), la canalisation de recyclage contrôlé (13) étant installée en aval du dispositif de déshumidification (3), et comporte un circuit direct (15) installé en parallèle du dispositif de déshumidification, le circuit direct (15) comportant une pompe (65), le circuit direct (15) prélevant le gaz humide en aval de la pile et acheminant le gaz humide au circuit d'alimentation (11) sans passer par le dispositif de déshumidification (3), et **en ce qu'**il comporte des moyens de dosage pour contrôler la proportion entre gaz humide et gaz déshumidifié ramené en amont de la pile.

2. Système selon la revendication 1, dans lequel le circuit de recyclage comporte une canalisation de recyclage passif (14), installée en parallèle de la canalisation de recyclage contrôlé (13), associée à un éjecteur (4) à effet Venturi installé sur le circuit d'alimentation (11).

3. Système selon la revendication 1, dans lequel le circuit de recyclage abouti à un éjecteur (4) installé sur le circuit d'alimentation en gaz.

4. Système selon l'une des revendications précédentes, dans lequel les moyens de dosage comportent une unité de commande (7) permettant de piloter sélectivement le fonctionnement des pompes (63 et 65).

5. Système selon l'une des revendications précédentes, dans lequel l'unité de commande (7) pilote sélectivement le fonctionnement des pompes (63 et 65) en fonction des valeurs transmises par un capteur d'humidité (74).

6. Système selon la revendication 4 dans lequel le capteur d'humidité (74) est installé juste à l'entrée de la pile (1).

7. Système selon l'une des revendications précédentes, comportant un circuit de recyclage sur le circuit de gaz comburant.

8. Système selon l'une des revendications précédentes, dans lequel le circuit de gaz comburant est un circuit d'alimentation en oxygène pur.

9. Système selon l'une des revendications précédentes, dans lequel le circuit de gaz comburant est un circuit d'alimentation en mélange d'oxygène pur et d'au moins un gaz neutre.

10. Système selon l'une des revendications précédentes, pour véhicule automobile.

## Patentansprüche

1. Stromerzeugungssystem, das enthält:
- eine Brennstoffzelle (1), die eine Vielzahl von Zellen aufweist, welche je eine Anode und eine Kathode zu beiden Seiten eines Elektrolyten mit fester Polymermembran haben, die unter vorbestimmten Befeuchtungsbedingungen optimale Betriebseigenschaften hat, wobei die Zelle einen Versorgungskreis mit Treibstoffgas (11) auf der Anodenseite und einen Versorgungskreis mit Verbrennungsgas auf der Kathodenseite hat;
- mindestens einen Rückführkreis eines der Treibstoffgase oder Verbrennungsgase, der das nicht von der Zelle verbrauchte Gas zurückführt, wobei der Rückführkreis eine Entfeuchtungsvorrichtung (3) aufweist, die es ermöglicht, aus dem nicht verbrauchten Gas das in ihm enthaltene Wasser zu entfernen, wobei der Rückführkreis ein feuchtes Gas stromabwärts hinter der Zelle auffängt, das feuchte Gas zur Entfeuchtungsvorrichtung befördert und ein entfeuchtetes Gas zum Versorgungskreis (11) stromaufwärts vor der Zelle zurückführt, nachdem das Gas die Entfeuchtungsvorrichtung durchquert hat;
**dadurch gekennzeichnet, dass** der Rückführkreis eine kontrollierte Rückführleitung (13) aufweist, die eine Pumpe (63) aufweist, wobei die kontrollierte Rückführleitung (13) stromabwärts hinter der Entfeuchtungsvorrichtung (3) installiert ist, und einen direkten Kreis (15) aufweist, der parallel zur Entfeuchtungsvorrichtung installiert ist, wobei der direkte Kreis (15) eine Pumpe (65) aufweist, wobei der direkte Kreis (15) das feuchte Gas stromabwärts hinter der Zelle auffängt und das feuchte Gas zum Versorgungskreis (11) befördert, ohne über die Entfeuchtungsvorrichtung (3) zu gehen, und dass es Dosiereinrichtungen aufweist, um das Verhältnis zwischen feuchtem Gas und stromaufwärts vor die Zelle zurückgeführtem entfeuchtetem Gas zu kontrollieren.

2. System nach Anspruch 1, wobei der Rückführkreis eine parallel zur kontrollierten Rückführleitung (13) installierte passive Rückführleitung (14) aufweist, die einem Ejektor (4) mit Venturi-Effekt zugeordnet ist, der auf dem Versorgungskreis (11) installiert ist.

3. System nach Anspruch 1, wobei der Rückführkreis an einem Ejektor (4) mündet, der auf dem Gasversorgungskreis installiert ist.

4. System nach einem der vorhergehenden Ansprüche, wobei die Dosiereinrichtungen eine Steuereinheit (7) aufweisen, die es ermöglicht, den Betrieb der Pumpen (63 und 65) selektiv zu steuern.

5. System nach einem der vorhergehenden Ansprüche, wobei die Steuereinheit (7) den Betrieb der Pumpen (63 und 65) abhängig von den von einem Feuchtigkeitssensor (74) übertragenen Werten selektiv steuert.

6. System nach Anspruch 4, wobei der Feuchtigkeitssensor (74) direkt am Eingang der Zelle (1) installiert ist.

7. System nach einem der vorhergehenden Ansprüche, das einen Rückführkreis zum Verbrennungsgaskreis aufweist.

8. System nach einem der vorhergehenden Ansprüche, wobei der Verbrennungsgaskreis ein Versorgungskreis mit reinem Sauerstoff ist.

9. System nach einem der vorhergehenden Ansprüche, wobei der Verbrennnungsgaskreis ein Versorgungskreis mit einer Mischung aus reinem Sauerstoff und mindestens einem Schutzgas ist.

10. System nach einem der vorhergehenden Ansprüche für ein Kraftfahrzeug.

## Claims

1. Electricity production system comprising:
- a fuel cell (1) comprising a plurality of individual cells each having an anode and a cathode on either side of a solid polymer electrolyte membrane which has optimum operating characteristics in predetermined humidification conditions, the fuel cell having a fuel gas supply circuit (11) on the anode side and a combustive gas circuit on the cathode side;
- at least one recycling circuit for one of the fuel or combustive gases, which recycles the gas not consumed by the fuel cell, the said recycling circuit comprising a dehumidifier (3) which enables the water contained in the unconsumed gas to be removed, the recycling circuit collecting a moist gas downstream from the fuel cell, passing the moist gas to the dehumidifier and passing a dehumidified gas into the feed circuit (11) upstream from the fuel cell after the gas has been through the dehumidifier;
**characterised in that** the recycling circuit comprises a controlled recycling pipe (13) comprising a pump (63), the controlled recycling pipe (13) being installed downstream from the dehumidifier (3), and comprises a direct circuit (15) installed in parallel with the dehumidifier, the said direct circuit (15) comprising a pump (65), the direct circuit (15) tapping off the moist gas downstream from the fuel cell and passing the moist gas into the feed circuit (11) without passing through the dehumidifier (3), and **in that** it comprises dose metering means for controlling the respective proportions between the moist gas and the dehumidified gas returned upstream from the fuel cell.

2. System according to Claim 1, in which the recycling circuit comprises a passive recycling line (14) installed in parallel with the controlled recycling line (13), associated to a Venturi effect ejector (4) installed in the feed circuit (11).

3. System according to Claim 2, in which the recycling circuit leads to an ejector (4) installed in the gas feed circuit.

4. System according to any of the preceding claims, in which the dose metering means comprise a control unit (7) that enables the operation of the pumps (63 and 65) to be actuated selectively.

5. System according to any of the preceding claims, in which the control unit (7) controls the operation of the pumps (63 and 65) selectively as a function of the values transmitted by a humidity sensor (74).

6. System according to claim 5 wherein the humidity sensor (74) is installed at the fuel cell (1) entrance.

7. System according to any of the preceding claims, comprising a recycling circuit in the combustive gas circuit.

8. System according to any of the preceding claims, in which the combustive gas circuit is a pure oxygen supply circuit.

9. System according to any of the preceding claims, in which the combustive gas circuit is a circuit feeding a mixture of pure oxygen and at least one neutral gas.

10. System according to any of the preceding claims, for an automobile vehicle.
